(19) Europäisches Patentamt / European Patent Office / Office européen des brevets

(11) **EP 2 363 937 B1**

(12) **EUROPEAN PATENT SPECIFICATION**

(45) Date of publication and mention
of the grant of the patent:
**03.07.2019   Bulletin 2019/27**

(51) Int Cl.:
*H02J 7/14* *(2006.01)*   *H02J 7/00* *(2006.01)*

(21) Application number: **10195924.5**

(22) Date of filing: **20.12.2010**

(54) **Power generation control apparatus**

Stromerzeugungssteuerungsvorrichtung

Appareil de contrôle de génération électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2010   JP 2010004379**

(43) Date of publication of application:
**07.09.2011   Bulletin 2011/36**

(73) Proprietor: **Mitsubishi Jidosha Kogyo Kabushiki
Kaisha
Tokyo 108-8410 (JP)**

(72) Inventor: **Funakoshi, Hiroshi
Tokyo 108-8410 (JP)**

(74) Representative: **Vossius & Partner
Patentanwälte Rechtsanwälte mbB
Siebertstrasse 3
81675 München (DE)**

(56) References cited:
**JP-A- H07 274 411     JP-A- 2005 080 396
JP-A- 2009 232 648     US-A1- 2004 145 186**

**Description**

BACKGROUND OF THE INVENTION

The invention relates to a power generation control apparatus that is used in a vehicle.

Conventionally, a generator is mounted to a vehicle so as to supply power to electric parts of the vehicle. In general, the generator is driven by an engine to generate power, which is then charged in accumulation means such as battery or capacitor.

In the meantime, JP-A-2006-230102 discloses a technique of charging a battery mounted to a vehicle.

Recently, the needs of protecting environments are increased and it is strongly required to reduce an amount of fuel that is consumed by a vehicle engine which drives a generator.

In the meantime, the types and the number of electric parts used in a vehicle are increased, and the importance of accumulation means of supplying power to the electric parts, such as battery or capacitor, is also increased.

Moreover, document JP 2005 080396 A is identified. However, in this document, the described system does not force charging the battery regardless of its state of charge before the starting driving.

At last, document JP 2009 232648 A is as well identified. However, in this document, the charging is not performed until the driving state is detected.

SUMMARY

It is therefore an object of the invention to provide a power generation control apparatus capable of enhancing energy efficiency of an engine required to drive a generator and avoiding a situation in which power accumulated in accumulation means becomes insufficient.

In order to achieve the object, according to the invention, there is provided a power generation control apparatus that is provided in a vehicle including an engine, a generator which is driven by the engine and output voltage of which is variable, and accumulating means connected to the generator, the power generation control apparatus comprising: accumulation amount calculating means that calculates an accumulation amount of the accumulating means; output voltage setting means that sets a first value as the output voltage when the accumulation amount is below an accumulation amount threshold value, and sets a second value, which is smaller than the first value, as the output voltage when the accumulation amount is not less than the accumulation amount threshold value; startup state detecting means that detects a startup state of the engine; and driving state detecting means that detects a driving state of the vehicle, wherein the output voltage setting means sets the first value as the output voltage, regardless of the accumulation amount calculated by the accumulation amount calculating means, until the driving state detecting means detects that the vehicle is driving after the startup state detecting means detects that the engine is starting up by an operation of a user in a parking state.

The power generation control apparatus may further include internal resistance calculating means that calculates an internal resistance of the accumulating means. When the internal resistance of the accumulating means calculated by the internal resistance calculating means is not less than a resistance threshold value, the output voltage setting means may set the first value as the output voltage, even after the driving state detecting means detects that the vehicle is driving.

The power generation control apparatus may further include full accumulation state detecting means that detects that the accumulating means is fully accumulated. When the accumulation amount of the accumulating means is unclear, the output voltage setting means may set the first value as the output voltage, until the full accumulation state detecting means detects that the accumulating means is fully accumulated, even after the driving state detecting means detects that the vehicle is driving.

The power generation control apparatus may further include current detecting means that detects current that is input to and output from the accumulating means. When the current detected by the current detecting means is below a current threshold value, the full accumulation state detecting means may determine that the accumulating means is fully accumulated.

The accumulation amount calculating means may calculate the accumulation amount of the accumulating means, based on the current detected by the current detecting means. The power generation control apparatus may further include calculated accumulation amount initializing means that executes an initialization control of resetting the accumulation amount of the accumulating means calculated by the accumulation amount calculating means into a full accumulation amount, when the full accumulation state detecting means detects that the accumulating means is fully accumulated.

BRIEF DESCRIPTION OF THE DRAWINGS

FIG. 1 is a schematic block diagram showing an overall structure of a power generation control apparatus according to an illustrative embodiment of the invention.

FIGS. 2 (A), 2 (B) and 2 (C) illustrate control of setting an accumulation amount threshold value by a power generation control apparatus according to an illustrative embodiment of the invention.

FIG. 3 is a schematic flow chart showing a power generation control by a power generation control apparatus according to an illustrative embodiment of the invention.

FIG. 4 is a schematic flow chart showing a power generation control by a power generation control apparatus according to an illustrative embodiment of the invention.

FIG. 5 is a schematic flow chart showing a power generation control by a power generation control apparatus according to an illustrative embodiment of the invention.

FIG. 6 is a schematic flow chart showing a power generation control by a power generation control apparatus according to an illustrative embodiment of the invention.

FIG. 7 is a schematic flow chart showing control of determination of full accumulation and initialization of calculated accumulation amount by a power generation control apparatus according to an illustrative embodiment of the invention.

FIG. 8 is a schematic flow chart showing calculation of internal resistance by a power generation control apparatus according to an illustrative embodiment of the invention.

DETAILED DESCRIPTION OF EMBODIMENTS

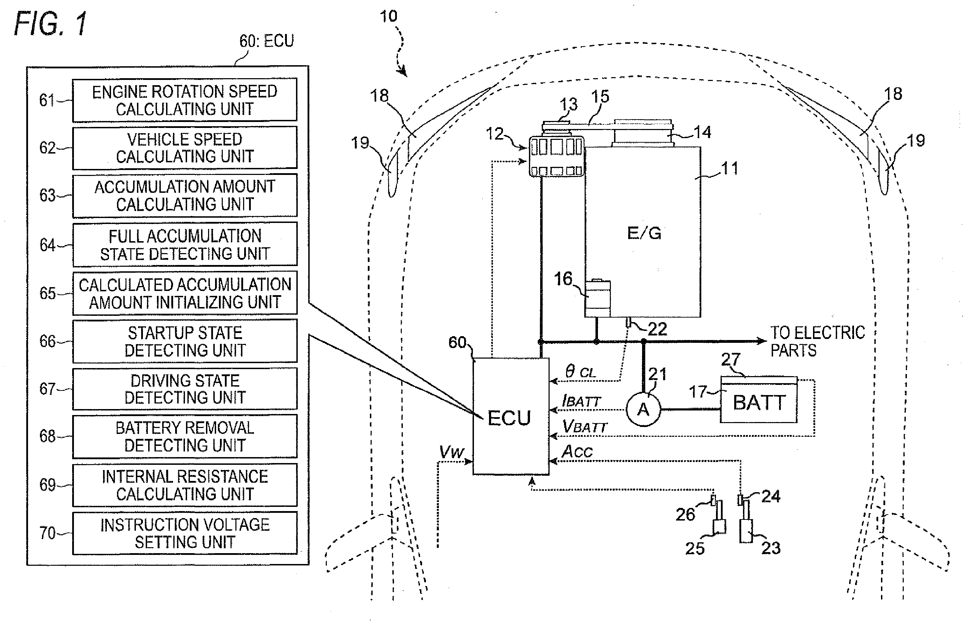

As shown in FIG. 1, a vehicle 10 includes an engine 11 mounted thereto. Engine torque generated by the engine 11 enables wheels (not shown) of the vehicle 10 to drive.

The vehicle 10 also includes an alternator (generator) 12. The alternator 12 is a variable voltage alternator output voltage (generating voltage) of which is variable.

To be more specific, the alternator 12 includes, as main parts, a rotor, a stator, a rectifier and a control circuit, which are not shown. In addition, the rotor is provided with a driven pulley 13. The driven pulley 13 and a drive pulley 14 provided to a crank shaft (not shown) of the engine 11 are connected by a belt 15. As the engine 11 is operated, the rotation of the crank shaft is transmitted to the rotor of the alternator 12 and the rotor is thus rotated in the stator, so that the alternator 12 generates power of three-phase alternate current.

The rectifier, which is not shown, rectifies the power of three-phase alternate current, which is generated by the relative rotation of the rotor and the stator, into direct current power and then outputs the direct current power.

The control circuit, which is not shown, is an integrated circuit (IC) that adjusts magnetic field current of the rotor and thus suppress variation of the output voltage of the alternator 12 even when rotational speed of the rotor is changed every moment in response to rotational speed $N_E$ of the engine 11. In addition, the control circuit is adapted to control the magnetic field current of the rotor to control the output voltage of the alternator 12, in response to an instruction voltage $V_D$ set by an electronic control unit (ECU) 60, which will be described below.

Further, the engine 11 includes a starter motor 16. A connection and disconnection device, which is not shown, is provided between the starter motor 16 and the crank shaft of the engine 11, thereby enabling the starter motor 16 and the crank shaft to be mechanically coupled in a connection and disconnection manner. In other words, when the engine 11 is under non-startup state (for example, normal driving state), the connection and disconnection device is under a state in which the starter motor 16 and the crank shaft are not mechanically coupled to each other (so-called disconnection state). When the engine 11 is under startup state, the connection and disconnection device is under a state in which the starter motor 16 and the crank shaft are coupled to each other (so-called connection state). As the starter motor 16 is driven under the connection state of the connection and disconnection device, the crank shaft of the engine 11, which is stopped, is driven, so that a cranking operation of the engine 11 is performed.

Further, the vehicle 10 includes a battery (accumulation means) 17. The battery 17 is electrically connected to the alternator 12 and various electric parts (for example, the starter motor 16, the ECU 60, a headlight 18, a tail lamp (not shown), a direction indicator 19, an interior lamp (not shown), a car audio system (not shown) and the like) by a power supply cable (not shown) . The battery 17 is a secondary battery that is charged by the direct current power generated by the alternator 12. When the power (consumption power) consumed by the electric parts is higher than the power (generated power) generated by the alternator 12, the battery 17 is discharged and the direct current power is supplied to the electric parts.

An amount of current (input current) input to the battery 17 and an amount of current (output current) output from the battery 17 are detected by a current sensor 21. The current sensor 21 is a non-contact current sensor that detects a magnetic field generated by current through the power supply cable connected to a positive terminal (not shown) of the battery 17 to detect an amount of input and output current (battery current amount) $I_{BATT}$ to and from the battery 17. In the meantime, the detection result $I_{BATT}$ by the current sensor 21 is read by the ECU 60.

In addition, a terminal voltage (battery voltage) of the battery 17 is detected by a voltage sensor 27. In the meantime, a detection result $V_{BATT}$ by the voltage sensor 27 is read by the ECU 60.

Also, the engine 11 is provided with a crank shaft angle sensor 22 that detects an angle $\theta_{CL}$ of the crank shaft. The detection result $\theta_{CL}$ by the crank shaft angle sensor 22 is read by the ECU 60.

Further, the vehicle 10 includes a wheel speed sensor (not shown) that detects rotational speed $V_w$ of a wheel and an accelerator pedal position sensor 24 that detects a pedaling amount $A_{CC}$ of an accelerator pedal 23. The detection result $V_w$ by the wheel speed sensor and the detection result $A_{CC}$ by the accelerator pedal position sensor 24 are read by the ECU 60.

In addition, the vehicle 10 includes a brake pedal switch 26. The brake pedal switch 26 is in on state when a brake pedal 25 is pedaled and the brake pedal switch 26 is in off state when the brake pedal 25 is not pedaled. A state of the brake pedal switch 26 is monitored by the ECU 60.

The ECU 60 is an electronic control unit including a memory and a CPU (Central Processing Unit), which are not shown. In the memory of the ECU 60, an engine rotation speed calculating unit (engine rotation speed calculating means) 61, a vehicle speed calculating unit (vehicle speed calculating means) 62, an accumulation amount calculating unit (accumulation amount calculating means) 63, a full accumulation state detecting unit (full accumulation state detecting means) 64, a calculated accumulation amount initializing unit (calculated accumulation amount initializing means) 65, a startup state detecting unit (startup state detecting means) 66, a driving state detecting unit (driving state detecting means) 67, a battery removal detecting unit (battery removal detecting means) 68, an internal resistance calculating unit (internal resistance calculating means) 69 and an instruction voltage setting unit (generating voltage setting means) 70, all of which are software programs, are recorded.

The ECU 60 includes a button battery (not shown) serving as an emergency power supply embedded therein. In other words, the ECU 60 is usually operated by power supplied from the battery 17. However, when the ECU 60 cannot be supplied with power from the battery 17 due to any reason (for example, when the electrical connection between the ECU 60 and the battery 17 is disconnected or when the battery 17 is being exchanged), the ECU is operated by the power supplied from the button battery.

The engine rotation speed calculating unit 61 calculates rotational speed $N_E$ of the engine 11, based on the crank shaft angle $\theta_{CL}$ read from the crank shaft angle sensor 22.

The vehicle speed calculating unit 62 calculates speed $V_S$ of the vehicle (vehicle speed), based on the wheel rotation speed $V_W$ read from the wheel speed sensor.

The accumulation amount calculating unit 63 adds up the battery current amount $I_{BATT}$ detected by the current sensor 21 and thus calculates an accumulation amount BT of the battery 17. In other words, the accumulation amount calculating unit 63 estimates that the accumulation amount BT of the battery is increased when the battery current amount $I_{BATT}$ detected by the current sensor 21 is positive, and estimates that the accumulation amount BT of the battery 17 is decreased when the battery current amount $I_{BATT}$ detected by the current sensor 21 is negative. The accumulation amount calculating unit 63 is adapted to calculate the accumulation amount BT of the battery 17 that is changed every moment. In addition, the accumulation amount calculating unit 63 is adapted to record the calculated accumulation amount BT of the battery 17 in the memory of the ECU 60.

The full accumulation state detecting unit 64 detects that the battery 17 is fully accumulated. To be more specific, the full accumulation state detecting unit 64 is adapted to detect that the battery 17 is fully accumulated, when a detection condition of full accumulation state defined by a following condition (11) is satisfied.

Condition (11) : A state in which the instruction voltage $V_D$ is a first instruction voltage $V_{D1}$ (first value: for example, 14.0V) and the battery current $I_{BATT}$ is below a current threshold value $I_{th}$ is maintained for a predetermined time period (for example, 30 seconds) .

Here, the instruction voltage $V_D$ is a voltage value that instructs generating power (output voltage) of the alternator 12, and is set by the instruction voltage setting unit 70 that will be described below. The current threshold value $I_{th}$ is recorded in the memory of the ECU 60 and is set to be 5A in this illustrative embodiment.

The calculated accumulation amount initializing unit 65 carries out a control (initialization control) of resetting the accumulation amount BT of the battery 17, which is calculated by the accumulation amount calculating unit 63 and is recorded in the memory of the ECU 60, into a full accumulation amount (BT = 100%), when the full accumulation state detecting unit 64 detects that the battery 17 is fully accumulated.

The startup state detecting unit 66 detects that the engine 11 is starting up.

Specifically, the startup state detecting unit 66 is adapted to detect that the engine 11 is starting up, when an engine start switch (not shown) provided in the vehicle 10 is in on state. In the meantime, the engine start switch becomes on state only when it is operated by a user of the vehicle 10. Accordingly, when the engine start switch is operated by the user and is thus in on state, the power is supplied to the starter motor 16 from the battery 17 and a cranking operation of the engine 11 is carried out. On the other hand, when the engine start switch is not operated by the user and is thus in off state, a cranking operation of the engine 11 is not performed.

The driving state detecting unit 67 detects that the vehicle 10 is driving.

To be more specific, the driving state detecting unit 67 is adapted to detect that the vehicle 10 is driving, when the vehicle speed $V_S$ of the vehicle 10 calculated by the vehicle speed calculating unit 62 is not zero. In addition, once the driving state detecting unit 67 detects that the vehicle 10 is driving, it is adapted to record a flag (driving record flag) indicating that the vehicle 10 has driven in the memory of the ECU 60.

The battery removal detecting unit 68 detects that the battery 17 is removed from the vehicle 10.

Specifically, the battery removal detecting unit 68 is adapted to assume that the battery 17 is removed from the vehicle 10, when the ECU 60 is not supplied with the power from the battery 17, and then to record a flag (battery removal flag) indicating that the battery removal has been detected in the memory of the ECU 60. In addition, the battery removal detecting unit 68 is adapted to erase the accumulation amount BT of the battery 17, which is recorded in the memory of the ECU 60 by the accumulation amount calculating unit 63, when the ECU 60 is not supplied with the power from the battery 17. Further, the battery removal detecting unit 68 is adapted to erase the battery removal flag recorded in the memory, when the full accumulation state detecting unit 64 detects that the battery 17 is fully accumulated.

The internal resistance calculating unit 69 calculates an internal resistance $R_{BATT}$ of the battery 17, when the startup state detecting unit 66 detects that the engine 11 is starting up.

To be more specific, the internal resistance calculating unit 69 is adapted to record the battery current $I_{BATT}$, which is detected by the current sensor 21, and the battery voltage $V_{BATT}$, which is detected by the voltage sensor 27, periodically (for example, every 0.05 second) in a buffer area for calculation defined in the memory of the ECU 60, until a cranking operation of the engine 11 is ended after the cranking operation has started. Then, when the cranking operation is ended, the internal resistance calculating unit is adapted to calculate the internal resistance $R_{BATT}$ of the battery 17, based on the battery current $I_{BATT}$ and the battery voltage $V_{BATT}$, which are recorded in the buffer area for calculation. When the calculation of the internal resistance $R_{BATT}$ is completed, the internal resistance calculating unit 69 is adapted to erase the battery current $I_{BATT}$ and the battery voltage $V_{BATT}$, which are recorded in the buffer area for calculation. In the meantime, the internal resistance $R_{BATT}$ of the battery 17 and the accumulation amount BT of the battery 17 are values that are contrary to each other. In other words, the internal resistance $R_{BATT}$ of the battery 17 and the accumulation amount BT of the battery 17 have such a general relation that when the internal resistance $R_{BATT}$ is increased, the accumulation amount BT is decreased and when the internal resistance $R_{BATT}$ is decreased, the accumulation amount BT is increased.

The instruction voltage setting unit 70 sets, as the instruction voltage $V_D$ for the alternator 12, a first instruction voltage $V_{D1}$, a second instruction voltage $V_{D2}$ (second value) or a third instruction voltage $V_{D3}$ (third value). The first instruction voltage $V_{D1}$, the second instruction voltage $V_{D2}$ and the third instruction voltage $V_{D3}$ are respectively set to satisfy a following relation (1).

$$V_{D1} > V_{D3} > V_{D2} \quad \cdots \cdots \quad (1)$$

Meanwhile, in this illustrative embodiment, the first instruction voltage $V_{D1}$ is set to be 14.0V, the second instruction voltage $V_{D2}$ is set to be 12.2V and the third instruction voltage $V_{D3}$ is set to be 12.8V.

To be more specific, the instruction voltage setting unit 70 is adapted to set the instruction voltage $V_D$ that is an instruction value of the output voltage of the alternator 12, in accordance with whether the accumulation amount BT of the battery 17 calculated by the accumulation amount calculating unit 63 is above an accumulation amount threshold value $BT_{th}$, below the accumulation amount threshold value $BT_{th}$ or within the accumulation amount threshold value $BT_{th}$ (i.e., equal to the accumulation amount threshold value $BT_{th}$). Further, in this illustrative embodiment, the accumulation amount threshold value $BT_{th}$ is set to have a predetermined amount of width (for example, 1%).

In other words, when the accumulation amount BT of the battery 17 is above the accumulation amount threshold value $BT_{th}$ (BT > $BT_{th}$), the instruction voltage setting unit 70 is adapted to set the second instruction voltage $V_{D2}$ (12.2V) as the instruction voltage $V_D$. In the meantime, when the accumulation amount BT of the battery 17 is below the accumulation amount threshold value $BT_{th}$ (BT < $BT_{th}$), the instruction voltage setting unit 70 is adapted to set the first instruction voltage $V_{D1}$ (14.0V) as the instruction voltage $V_D$. Further, when the accumulation amount BT of the battery 17 is within the accumulation amount threshold value $BT_{th}$ (BT = $BT_{th}$), the instruction voltage setting unit 70 is adapted to set the third instruction voltage $V_{D3}$ (12.8V) as the instruction voltage $V_D$. In the meantime, the control on the instruction voltage $V_{D1}$, which is performed by the instruction voltage setting unit 70 in accordance with the accumulation amount BT of the battery 17, is referred to as "normal control."

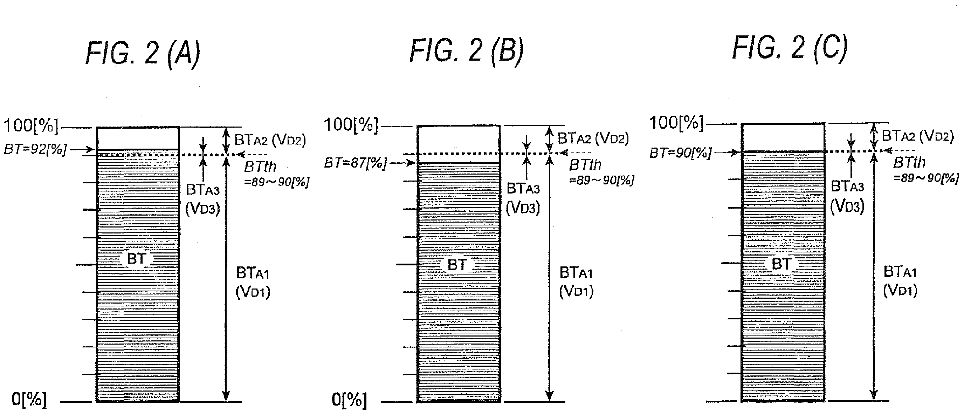

Here, the normal control of the instruction voltage setting unit 70 will be further described with reference to FIGS. 2(A), 2(B) and 2(C). In this illustrative embodiment, the accumulation amount threshold value $BT_{th}$ is fixed to 89 to 90%. In the followings, cases in which the accumulation amount BT of the battery 17 is 92% (refer to FIG. 2(A)), 87% (refer to FIG. 2(B)) and 90% (refer to FIG. 2(C)), respectively, will be described.

As shown in FIG. 2(A), when the accumulation amount BT of the battery 17 is above the accumulation amount threshold value $BT_{th}$ (BT > $BT_{th}$), the accumulation amount BT of the battery 17 belongs in a range (second voltage range) $BT_{A2}$ of the accumulation amount BT, in which the second instruction voltage $V_{D2}$ is set as the instruction voltage $V_D$, and the instruction voltage setting unit 70 is adapted to set the second instruction voltage $V_{D2}$ (12.2V) as the instruction voltage $V_D$.

As shown in FIG. 2(B), when the accumulation amount BT of the battery 17 is below the accumulation amount threshold value $BT_{th}$ (BT < $BT_{th}$), the accumulation amount BT of the battery 17 belongs in a range (first voltage range) $BT_{A1}$ of the accumulation amount BT, in which the first instruction voltage $V_{D1}$ is set as the instruction voltage $V_D$, and the instruction voltage setting unit 70 is adapted to set the first instruction voltage $V_{D1}$ (14.0V) as the instruction voltage $V_D$.

As shown in FIG. 2(C), when the accumulation amount BT of the battery 17 is within the accumulation amount threshold value $BT_{th}$ (BT = $BT_{th}$), the accumula-

tion amount BT of the battery 17 belongs in a range (third voltage range) $BT_{A3}$ of the accumulation amount BT, in which the third instruction voltage $V_{D3}$ is set as the instruction voltage $V_D$, and the instruction voltage setting unit 70 is adapted to set the third instruction voltage $V_{D3}$ (12.8V) as the instruction voltage $V_D$.

However, the instruction voltage setting unit 70 is adapted to carry out a following "startup control" in preference to the normal control.

In other words, the instruction voltage setting unit 70 is adapted to set the first instruction voltage $V_{D1}$ as the instruction voltage $V_D$, regardless of the accumulation amount BT of the battery 17, until the driving state detecting unit 67 detects that the vehicle 10 is driving after the startup state detecting unit 66 detects that the engine 11 is starting up.

In addition, when the internal resistance $R_{BATT}$ of the battery 17 calculated by the internal resistance calculating unit 69 exceeds a resistance threshold value $R_{th}$, the instruction voltage setting unit 70 is adapted to set the first instruction voltage $V_{D1}$ as the instruction voltage $V_D$, regardless of the accumulation amount BT of the battery 17, even after the startup state detecting unit 66 detects that the engine 11 is starting up and then the driving state detecting unit 67 detects that the vehicle 10 is driving.

Further, when the battery removal detecting unit 68 detects that the battery 17 is removed, namely when the battery removal flag is recorded in the memory of the ECU 60, the instruction voltage setting unit 70 is adapted to determine that the accumulation amount BT of the battery 17 is unclear. When it is determined that the accumulation amount BT of the battery 17 is unclear, the instruction voltage setting unit 70 is adapted to set the first instruction voltage $V_{D1}$ as the instruction voltage $V_D$, until the full accumulation state detecting unit 64 detects that the battery 17 is fully accumulated, even after the startup state detecting unit 66 detects that the engine 11 is starting up and then the driving state detecting unit 67 detects that the vehicle 10 is driving.

The power generation control apparatus that has been configured as described above according to an illustrative embodiment of the invention has following operations and effects.

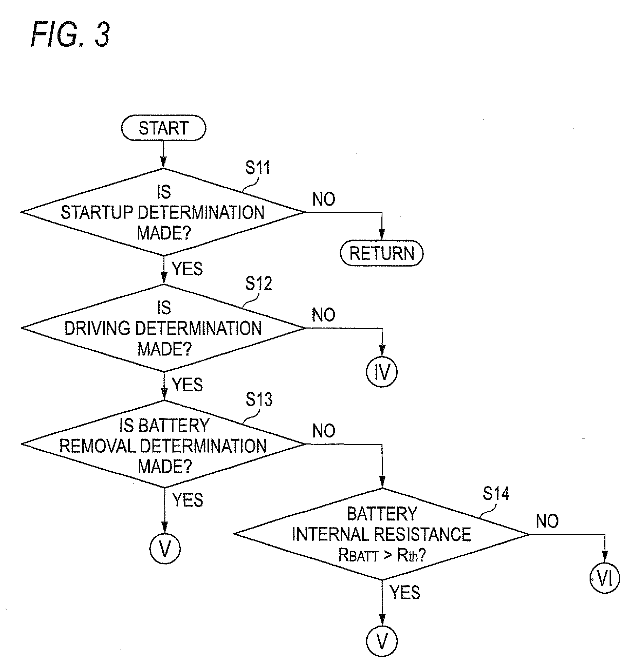

As shown in a flow chart of FIG. 3, the startup state detecting unit 66 determines whether the engine 11 is starting up or not, depending on the state of the engine start switch provided in the vehicle 10 (step S11). Here, when the engine start switch (not shown) is in on state, the startup state detecting unit 66 detects that the engine 11 is starting up (Yes route in step S11).

When the startup state detecting unit 66 detects that the engine 11 is starting up, the driving state detecting unit 67 determines whether the driving determination of the vehicle 10 has been made, in accordance with whether the vehicle speed $V_S$ of the vehicle 10 calculated by the vehicle speed calculating unit 62 is zero or not, or whether a driving record flag is recorded in the memory of the ECU 60 (step S12).

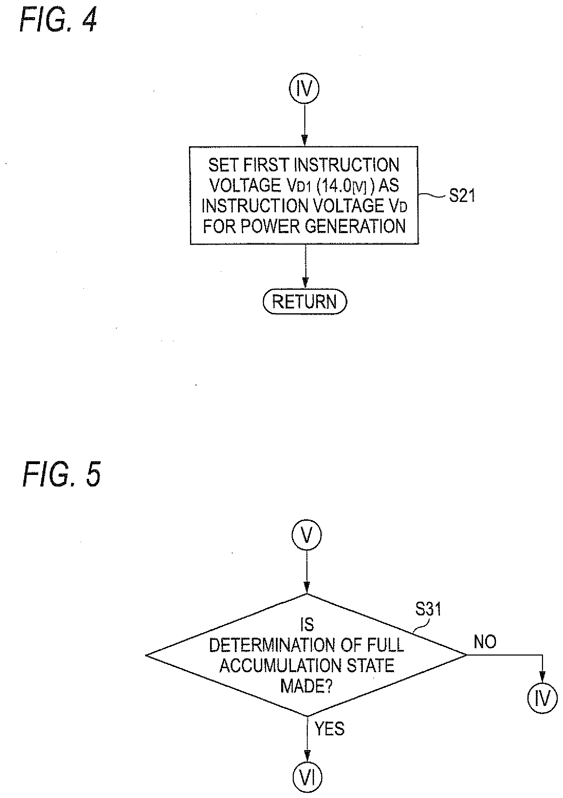

Here, when the vehicle speed $V_S$ of the vehicle 10 is zero, the driving state detecting unit 67 does not carry out the detection that the vehicle 10 is driving (No route in step S12), or when a driving record flag is not recorded in the memory of the ECU 60, the driving state detecting unit 67 does not carry out the detection that the vehicle 10 has driven (No route in step S12). Then, the instruction voltage setting unit 70 sets the first instruction voltage $V_{D1}$ (14.0V) as the instruction voltage $V_D$, as shown in FIG. 4 (step S21).

Meanwhile, in step S12 of FIG. 3, when the vehicle speed $V_S$ of the vehicle 10 is not zero, the driving state detecting unit 67 detects that the vehicle 10 is driving (Yes route in step S12), or when a driving record flag is recorded in the memory of the ECU 60, the driving state detecting unit 67 detects that there is a record that the vehicle 10 has driven (Yes route in step S12). Then, the instruction voltage setting unit 70 determines whether the battery 17 has been removed from the vehicle 10 by determining whether a battery removal flag is recorded in the memory of the ECU 60 (step S13).

Here, when a battery removal flag is recorded (Yes route in step S13), the accumulation amount BT of the battery 17 is unclear because the accumulation amount BT of the battery 17, which should be recorded by the accumulation amount calculating unit 63, is not recorded in the memory of the ECU 60.

In this case, as shown in FIG. 4, the instruction voltage setting unit 70 sets the first instruction voltage $V_{D1}$ (14.0V) as the instruction voltage VD (step S21), until the full accumulation state detecting unit 64 detects that the battery 17 is fully accumulated (No route in step S31), as shown in FIG. 5.

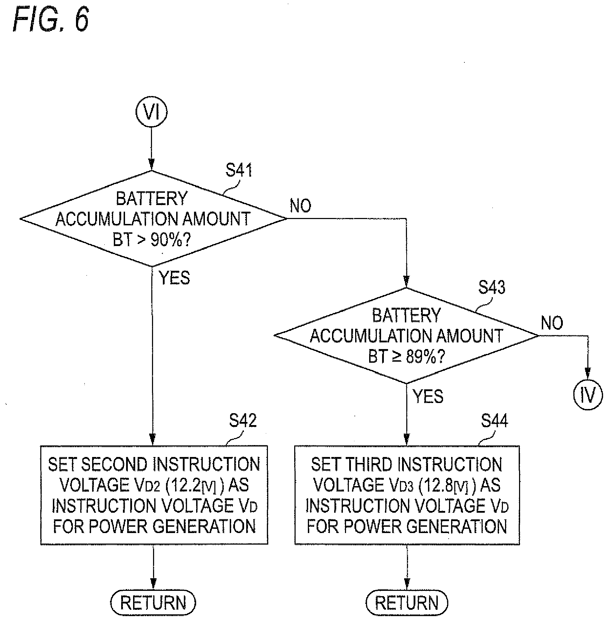

Meanwhile, in step S31 shown in FIG. 5, when the full accumulation state detecting unit 64 detects that the battery 17 is fully accumulated (Yes route in step S31), the instruction voltage setting unit 70 carries out the normal control, as shown in FIG. 6.

Namely, in this case, the instruction voltage setting unit 70 determines whether the accumulation amount BT of the battery 17 calculated by the accumulation amount calculating unit 63 is above the accumulation amount threshold value $BT_{th}$, below the accumulation amount threshold value $BT_{th}$ or within the accumulation amount threshold value $BT_{th}$.

To be more specific, the instruction voltage setting unit 70 first determines whether the accumulation amount BT of the battery 17 is above the accumulation amount threshold value $BT_{th}$ (step S41). Here, when the accumulation amount BT of the battery 17 is above the accumulation amount threshold value $BT_{th}$ (BT > 90%) (Yes route in step S41), the instruction voltage setting unit 70 sets the second instruction voltage $V_{D2}$ (12.2V) as the instruction voltage $V_D$ for power generation (step S42) .

In the meantime, when the accumulation amount BT of the battery 17 is not above the accumula-

tion amount threshold value $BT_{th}$ (No route in step S41), the instruction voltage setting unit 70 further determines whether the accumulation amount BT of the battery 17 is below the accumulation amount threshold value $BT_{th}$ (step S43). Here, when the accumulation amount BT of the battery 17 is below the accumulation amount threshold value $BT_{th}$ (BT < 89%) (No route in step S43), the instruction voltage setting unit 70 sets the first instruction voltage $V_{D1}$ (14.0V) as the instruction voltage $V_D$ for power generation (step S21), as shown in FIG. 4.

In addition, as shown in FIG. 6, when the accumulation amount BT of the battery 17 is not above the accumulation amount threshold value $BT_{th}$ (No route in step S41 of FIG. 6) and the accumulation amount BT of the battery 17 is not below the accumulation amount threshold value $BT_{th}$ (Yes route in step S43), namely, the accumulation amount BT of the battery is within the accumulation amount threshold value $BT_{th}$ (90% ≥ BT ≥ 89%), the instruction voltage setting unit 70 sets the third instruction voltage $V_{D2}$ (12.8V) as the instruction voltage $V_D$ for power generation (step S44).

Meanwhile, in step S13 of FIG. 3, when a battery removal flag is not recorded in the memory of the ECU 60 (No route in step S13), the instruction voltage setting unit 70 determines whether the internal resistance $R_{BATT}$ of the battery 17 calculated by the internal resistance calculating unit 69 exceeds the resistance threshold value $R_{th}$ (step S14). When the internal resistance $R_{BATT}$ exceeds the resistance threshold value $R_{th}$ (Yes route in step S14), the instruction voltage setting unit 70 sets the first instruction voltage $V_{D1}$ (14.0V) as the instruction voltage $V_D$ (step S21 of FIG. 4), until the full accumulation state detecting unit 64 detects that the battery 17 is fully accumulated (No route in step S31), as shown in FIG. 5. Meanwhile, when the internal resistance $R_{BATT}$ is equal to or smaller than the resistance threshold value $R_{th}$ (No route in step S14), the instruction voltage setting unit 70 carries out the normal control using FIG. 6.

Meanwhile, in step S31 of FIG. 5, when the full accumulation state detecting unit 64 detects that the battery 17 is fully accumulated (Yes route in step S31), the instruction voltage setting unit 70 carries out the normal control using FIG. 6, as described above.

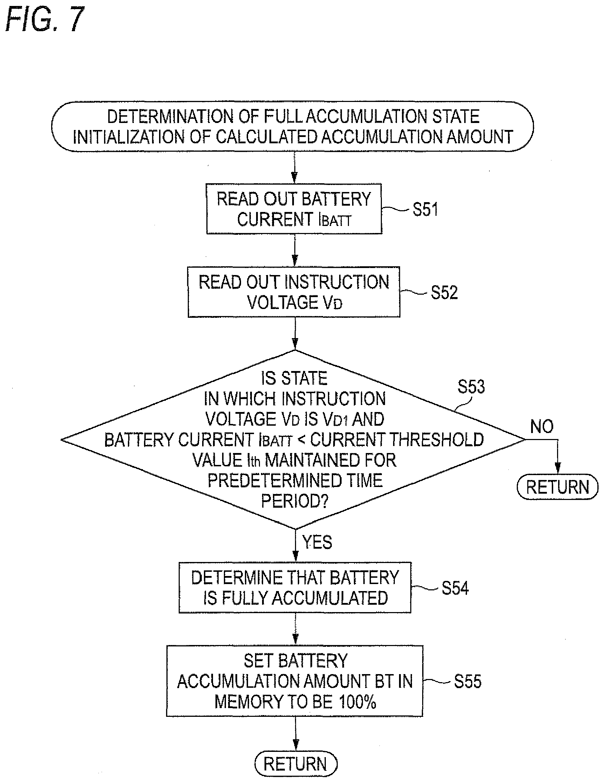

Next, determination of full accumulation state of the battery 17 by the full accumulation state detecting unit 64 and initialization of calculated accumulation amount by the calculated accumulation amount initializing unit 65 will be described using a flow chart of FIG. 7.

The full accumulation state detecting unit 64 reads out the battery current $I_{BATT}$ detected by the current sensor 21 (step S51) and the instruction voltage $V_D$ set by the instruction voltage setting unit 70 (step S52).

After that, the full accumulation state detecting unit 64 determines whether the detection condition of the full accumulation state defined as the condition (11) is satisfied (step S53).

Here, when the detection condition of the full accumulation state is satisfied (Yes route in step S53), the full accumulation state detecting unit 64 determines that the accumulation amount BT of the battery 17 is full (BT = 100%) (determination of full accumulation state) (step S54).

When the determination of the full accumulation state is made by the full accumulation state detecting unit 64, the calculated accumulation amount initializing unit 65 executes a control (initialization control) of resetting the accumulation amount BT of the battery 17, which is calculated by the accumulation amount calculating unit 63 and is recorded in the memory of the ECU 60, into a full accumulation amount (BT = 100%) (step S55).

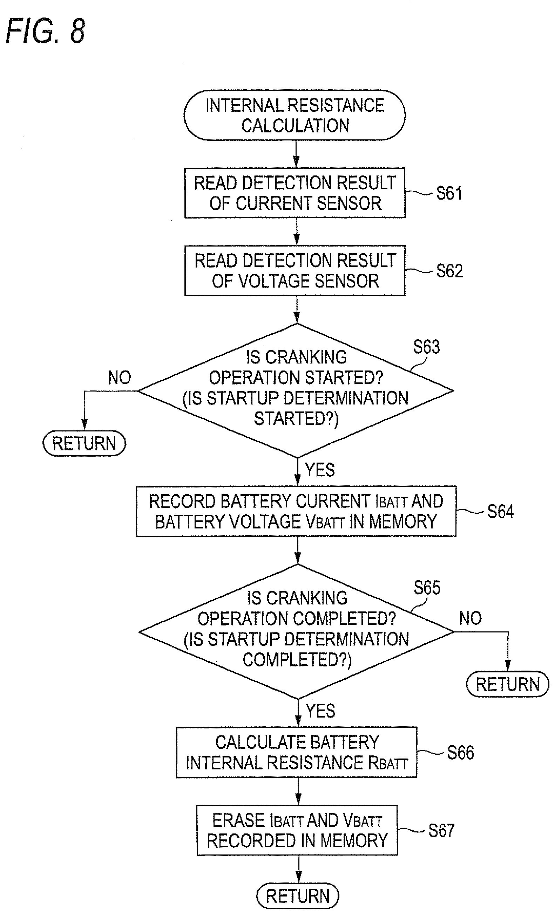

Next, a control of calculating the internal resistance $R_{BATT}$ of the battery 17 by the internal resistance calculating unit 69 will be described using a flow chart shown in FIG. 8.

The internal resistance calculating unit 69 periodically (for example, every 0.05 second) reads out the battery current $I_{BATT}$ from the current sensor 21 (step S61) and the battery voltage $V_{BATT}$ detected by the voltage sensor 27 (step S62).

While the cranking operation of the engine 11 starts and then ends, i.e., while the startup state detecting unit 66 detects that the engine 11 is starting up (from Yes route in step S63 to No route in step S65), the internal resistance calculating unit records the battery current $I_{BATT}$ and the battery voltage $V_{BATT}$, which are read out in steps S61 and S62, in the buffer area for calculation defined in the memory of the ECU 60 (step S64) .

After that, when the cranking operation ends (Yes route in step S65), the internal resistance calculating unit 69 calculates an internal resistance $R_{BATT}$ of the battery 17, based on the battery current $I_{BATT}$ and the battery voltage $V_{BATT}$, which are recorded in the buffer area for calculation (step S66). In the meantime, when the calculation of the internal resistance $I_{BATT}$ is completed, the internal resistance calculating unit 69 erases the battery current $I_{BATT}$ and the battery voltage $V_{BATT}$, which are recorded in the buffer area for calculation (step S67) .

Like this, the instruction voltage setting unit 70 is adapted to set the first instruction voltage $V_{D1}$ as the instruction voltage $V_D$ for the alternator 12, after the startup state detecting unit 66 detects that the engine 11 is starting up until the driving state detecting unit 67 detects that the vehicle 10 is driving.

Thereby, the battery 17 can be rapidly charged before the vehicle 10 starts to drive, so that it is possible to prevent a situation in which the accumulation amount BT of the battery 17 becomes insufficient (so-called running-out of battery) from occurring.

To be more specific, after the vehicle 10 is stopped and the engine 11 is not operated (hereinafter, such a state is referred to as a parking state), it is unusual that the power of the battery 17 is decreased to such a low degree enough to have an influence on operations of the electric parts. However, such a situation may occur. For example, when the parking state of the vehicle 10 is maintained for several months, power that is naturally discharged from the battery 17 cannot be ignored. In addition, the battery voltage may be lowered due to diffusion of an electrolyte (not shown) in the battery 17. Further, some electric parts (for example, a clock (not shown) embedded in the vehicle 10 or a vehicle antitheft apparatus (not shown)) mounted to the vehicle 10 consume insignificant power even when the vehicle 10 is under parking state. In other words, since the power is supplied to such electric parts from the battery 17, when the parking state of the vehicle 10 is maintained for a long time, the accumulation amount BT of the battery 17 may be insufficient. In addition, when a user of the vehicle 10 leaves an interior lamp (not shown) of the vehicle 10 turned on by mistake even though the vehicle 10 is under parking state, the accumulation amount BT of the battery 17 is lowered.

Even in such cases, it may be possible to start up the engine 11 by the starter motor 16 if the power somewhat remains in the battery 17. However, after that, the power (charge amount) supplied to the battery 17 by the alternator 12 becomes insufficient, so that the discharge of the battery 17 may be promoted.

However, according to the illustrative embodiment of the invention, the instruction voltage setting unit 70 is adapted to set the first instruction voltage $V_{D1}$ as the instruction voltage $V_D$ for the alternator 12, until the driving state detecting unit 67 detects that the vehicle 10 is driving after the startup state detecting unit 66 detects that the engine 11 is starting up.

Thereby, it is possible to rapidly charge the battery 17 before the vehicle 10 drives, so that it is possible to prevent a situation in which the accumulation amount BT of the battery 17 becomes insufficient (so called, running-out of battery) from occurring.

In addition, when a user of the vehicle 10 wants to rapidly charge the battery 17 by intent, the user has only to operate the engine 11 in a state in which the vehicle 10 is not driven after the engine 11 is started up. In other words, the user of the vehicle 10 can certainly charge the battery 17 by keeping the engine 11 at an idle state after starting up the engine 11.

In the meantime, a switch may be considered which enables the user of the vehicle 10 to manually select the instruction voltage $V_D$ for the alternator 12 from one of the first instruction voltage $V_{D1}$ the second instruction voltage $V_{D2}$ and the third instruction voltage $V_{D3}$. However, when the switch is provided, the manufacturing cost or weight of the vehicle 10 is increased. Regarding this, according to the illustrative embodiment of the invention, when the engine 11 is operated in a state in which the vehicle 10 is not driven after the engine 11 is started up, the first instruction voltage $V_{D1}$ is set as the instruction voltage $V_D$ for the alternator 12. Thus, according to the illustrative embodiment of the invention, a driver can intentionally increase or decrease the charge voltage for the battery 17 (namely, output voltage of the alternator 12) without increasing the cost or vehicle weight.

Further, after the vehicle 10 drives, the instruction voltage setting unit 70 sets the instruction voltage $V_D$ so as to reduce the output voltage of the alternator 12 as much as possible, within a range in which the accumulation amount BT of the battery 17 is not below the accumulation amount threshold value $BT_{th}$. Thus, it is possible to suppress the fuel consumption of the engine 11. In addition, when the internal resistance $R_{BATT}$ of the battery 17, which is calculated by the internal resistance calculating unit 69, is not less than the resistance threshold value $R_{th}$, the instruction voltage setting unit 70 is adapted to set the first instruction voltage $V_{D1}$ as the instruction voltage $V_D$, even after the startup state detecting unit 66 detects that the engine 11 is starting up and then the driving state detecting unit 67 detects that the vehicle 10 is driving.

Thereby, it is possible to charge the battery 17 more certainly.

In addition, when the accumulation amount BT of the battery 17 is unclear even after the startup state detecting unit 66 detects that the engine 11 is starting up and then the driving state detecting unit 67 detects that the vehicle 10 is driving, the instruction voltage setting unit 70 is adapted to set the first instruction voltage $V_{D1}$ as the instruction voltage $V_D$.

Here, in this illustrative embodiment, the case where the accumulation amount BT of the battery 17 is unclear is described as the case where the battery 17 is removed from the vehicle 10. Namely, when the ECU 60 is not supplied with the power from the battery 17, a possibility that the battery 17 has been removed from the vehicle 10 is assumed to be high. In addition, under such state, although the removed battery 17 may be again mounted to the vehicle 10, there is also a possibility that another battery will be mounted to the vehicle 10.

Like this, when the battery 17 is removed from the vehicle 10, there is a possibility that the accumulation amount BT of the battery 17, which is continuously calculated by the accumulation amount calculating unit 63 and is recorded in the memory of the ECU 60 before the battery 17 is removed, may be unreliable.

Due to this, according to the illustrative embodiment, when the ECU 60 is not supplied with the power from the battery 17, the battery removal detecting unit 68 is adapted to record the battery removal flag in the memory of the ECU 60 and to erase the accumulation amount BT of the battery 17 recorded in the memory of the ECU 60.

When the battery removal detecting unit 68 detects that the battery 17 is removed, namely when the battery removal flag is recorded in the memory of the ECU 60, the instruction voltage setting unit 70 is adapted to determine that the accumulation amount BT of the battery 17 is unclear. When it is determined that the accumulation amount BT of the battery 17 is unclear, the instruction voltage setting unit 70 is adapted to set the first instruction voltage $V_{D1}$ as the instruction voltage $V_D$, until the full accumulation state detecting unit 64 detects that the battery 17 is fully accumulated, even after the startup state detecting unit 66 detects that the engine 11 is starting up and then the driving state detecting unit 67 detects that the vehicle 10 is driving.

Thereby, the battery 17, which is assumed a battery after the exchange, is charged into the full accumulation state as soon as possible, so that it is possible to improve the reliability of the battery 17.

In addition, as described in the condition (11), for a case where a state in which the instruction voltage $V_D$ is the first instruction voltage $V_{D1}$ (for example, 14.0V) and the battery current $I_{BATT}$ is below the current threshold value $I_{th}$ is maintained for a predetermined time period (for example, 30 seconds), when the battery current $I_{BATT}$ detected by the current sensor 21 becomes below the current threshold value $I_{th}$ (for example, 5A), the full accumulation state detecting unit 64 is adapted to detect that the battery 17 is fully accumulated.

Just by determining whether the relatively simple condition is satisfied or not, it is possible to detect that the battery 17 is fully accumulated with high accuracy.

In addition, when the full accumulation state detecting unit 64 detects that the battery 17 is fully accumulated, the calculated accumulation amount initializing unit 65 is adapted to execute an initialization control of resetting the accumulation amount BT of the battery 17, which is calculated by the accumulation amount calculating unit 63 and is recorded in the memory of the ECU 60, into a full accumulation amount (BT = 100%).

Thereby, it is possible to further improve the accuracy of the accumulation amount BT of the battery 17 that is calculated by the accumulation amount calculating unit 63.

The illustrative embodiment of the invention has been described. However, it should be noted that the invention is not limited to the illustrative embodiment and can be modified and changed without departing from a scope of the invention. Hereinafter, modified embodiments will be described.

In the above illustrative embodiment, when the vehicle speed $V_S$ of the vehicle 10 calculated by the vehicle speed calculating unit 62 is not zero, the driving state detecting unit 67 determines that the vehicle 10 is driving. However, the invention is not limited thereto. For example, the driving state detecting unit 67 may determine that a vehicle is driving, when the vehicle speed is equal to or larger than a predetermined value (for example, 5 to 10 km/h).

In the above illustrative embodiment, the current sensor 21 is a non-contact current sensor. However, the invention is not limited to the non-contact current sensor. For example, any current sensor may be used inasmuch as it detects an amount of input and output current (battery current amount) $I_{BATT}$ to and from the battery 17.

In the above illustrative embodiment, when the condition (11) is satisfied, the full accumulation state detecting unit 64 determines that the battery 17 is fully accumulated. However, the invention is not limited to such a case. For example, it may be possible that when the condition that the battery current $I_{BATT}$ is below the current threshold value $I_{th}$ is just satisfied, the full accumulation state detecting unit 64 assumes that the full accumulation condition is satisfied and determines that the buttery 17 is fully charged.

In the above illustrative embodiment, the various numerical values have been exemplified. However, the invention is not limited to the numerical values.

According to an aspect of the invention, it is possible to enhance energy efficiency of an engine required to drive a generator and to avoid a situation in which the power accumulated in the accumulating means becomes insufficient.

The invention can be applied to the vehicle manufacturing industry and the like. The invention can be also applied to the automobile industry, the industry of manufacturing a power output apparatus and the like.

**Claims**

1. A power generation control apparatus that is provided in a vehicle (10) including an engine (11), a generator (12) which is driven by the engine (11) and output voltage of which is variable, and accumulating means (17) connected to the generator (12), the power generation control apparatus comprising:

   accumulation amount calculating means (63) that calculates an accumulation amount of the accumulating means (17);
   output voltage setting means (70) that sets a first value as the output voltage when the accumulation amount is below an accumulation amount threshold value, and sets a second value, which is smaller than the first value, as the output voltage when the accumulation amount is not less than the accumulation amount threshold value;
   startup state detecting means (66) that detects a startup state of the engine (11); and
   driving state detecting means (67) that detects a driving state of the vehicle (10),
   **characterized in that**:
   the output voltage setting means (70) sets the first value as the output voltage, regardless of the accumulation amount calculated by the accumulation amount calculating means (63), until the driving state detecting means (67) detects that the vehicle (10) is driving after the startup state detecting means (66) detects that the engine (11) is starting up by an operation of a user in a parking state.

2. The power generation control apparatus according to claim 1, further comprising internal resistance calculating means (69) that calculates an internal resistance of the accumulating means (17),

wherein, when the internal resistance of the accumulating means (17) calculated by the internal resistance calculating means (69) is not less than a resistance threshold value, the output voltage setting means (70) sets the first value as the output voltage, even after the driving state detecting means (67) detects that the vehicle (10) is driving.

3. The power generation control apparatus according to claim 1 or claim 2, further comprising full accumulation state detecting means (64) that detects that the accumulating means (17) is fully accumulated, wherein, when the accumulation amount of the accumulating means (17) is unclear, the output voltage setting means (70) sets the first value as the output voltage, until the full accumulation state detecting means (64) detects that the accumulating means (17) is fully accumulated, even after the driving state detecting means (67) detects that the vehicle (10) is driving.

4. The power generation control apparatus according to claim 3, further comprising current detecting means (21) that detects current that is input to and output from the accumulating means (21), wherein, when the current detected by the current detecting means (21) is below a current threshold value, the full accumulation state detecting means (64) determines that the accumulating means (17) is fully accumulated.

5. The power generation control apparatus according to claim 4, wherein the accumulation amount calculating means (63) calculates the accumulation amount of the accumulating means (17), based on the current detected by the current detecting means (21), and the power generation control apparatus further comprises calculated accumulation amount initializing means (65) that executes an initialization control of resetting the accumulation amount of the accumulating means (17) calculated by the accumulation amount calculating means (63) into a full accumulation amount, when the full accumulation state detecting means (64) detects that the accumulating means (17) is fully accumulated.

**Patentansprüche**

1. Stromerzeugungs-Steuervorrichtung, die in einem Fahrzeug (10) vorgesehen ist, das einen Motor (11), einen Generator (12), der durch den Motor (11) angetrieben wird und dessen Ausgangsspannung variabel ist, und eine mit dem Generator (12) verbundene Speichereinrichtung (17) aufweist, wobei die Stromerzeugungs-Steuervorrichtung aufweist:

eine Speichermengen-Berechnungseinrichtung (63), die eine Speichermenge der Speichereinrichtung (17) berechnet;

eine Ausgangsspannungs-Einstelleinrichtung (70), die einen ersten Wert als Ausgangsspannung einstellt, wenn die Speichermenge unter einem Speichermengen-Schwellwert liegt, und einen zweiten Wert, der kleiner als der erste Wert ist, als Ausgangsspannung einstellt, wenn die Speichermenge nicht kleiner als der Speichermengen-Schwellwert ist;

eine Startzustands-Detektionseinrichtung (66), die einen Startzustand des Motors (11) detektiert; und

eine Fahrzustands-Detektionseinrichtung (67), die einen Fahrzustand des Fahrzeugs (10) detektiert,

**dadurch gekennzeichnet, dass**:

die Ausgangsspannungs-Einstelleinrichtung (70) den ersten Wert als Ausgangsspannung unabhängig von der durch die Speichermengen-Berechnungseinrichtung (63) berechneten Speichermenge einstellt, bis die Fahrzustands-Detektionseinrichtung (67) detektiert, dass das Fahrzeug (10) fährt, nachdem die Startzustands-Detektionseinrichtung (66) detektiert, dass der Motor (11) durch eine Bedienung eines Benutzers in einem Parkzustand startet.

2. Stromerzeugungs-Steuervorrichtung nach Anspruch 1, ferner mit einer Innenwiderstands-Berechnungseinrichtung (69), die einen Innenwiderstand der Speichereinrichtung (17) berechnet, wobei dann, wenn der durch die Innenwiderstands-Berechnungseinrichtung (69) berechnete Innenwiderstand der Speichereinrichtung (17) nicht kleiner als ein Widerstandsschwellwert ist, die Ausgangsspannungs-Einstelleinrichtung (70) den ersten Wert als Ausgangsspannung einstellt, auch nachdem die Fahrzustands-Detektionseinrichtung (67) detektiert, dass das Fahrzeug (10) fährt.

3. Stromerzeugungs-Steuervorrichtung nach Anspruch 1 oder Anspruch 2, ferner mit einer Vollspeicherzustands-Detektionseinrichtung (64), die detektiert, dass die Speichereinrichtung (17) vollständig geladen ist, wobei dann, wenn die Speichermenge der Speichereinrichtung (17) unklar ist, die Ausgangsspannungs-Einstelleinrichtung (70) den ersten Wert als Ausgangsspannung einstellt, bis die Vollspeicherzustands-Detektionseinrichtung (64) detektiert, dass die Speichereinrichtung (17) vollständig geladen ist, auch nachdem die Fahrzustands-Detektionseinrichtung (67) detektiert, dass das Fahrzeug (10) fährt.

4. Stromerzeugungs-Steuervorrichtung nach Anspruch 3, ferner mit einer Stromdetektionseinrichtung (21), die Strom detektiert, der in die Speichereinrichtung (21) ein- und daraus ausgegeben wird, wobei dann, wenn der durch die Stromdetektionseinrichtung (21) detektierte Strom unter einem Stromschwellwert liegt, die Vollspeicherzustands-Detektionseinrichtung (64) bestimmt, dass die Speichereinrichtung (17) vollständig geladen ist.

5. Stromerzeugungs-Steuervorrichtung nach Anspruch 4,
wobei die Speichermengen-Berechnungseinrichtung (63) die Speichermenge der Speichereinrichtung (17) auf der Grundlage des durch die Stromdetektionseinrichtung (21) detektierten Stroms berechnet und
die Stromerzeugungs-Steuervorrichtung ferner eine Initialisierungseinrichtung (65) für die berechnete Speichermenge aufweist, die eine Initialisierungssteuerung zum Rücksetzen der durch die Speichermengen-Berechnungseinrichtung (63) berechneten Speichermenge der Speichereinrichtung (17) auf eine volle Speichermenge durchführt, wenn die Vollspeicherzustands-Detektionseinrichtung (64) detektiert, dass die Speichereinrichtung (17) vollständig geladen ist.

**Revendications**

1. Appareil de commande de génération électrique qui est fourni dans un véhicule (10) incluant un moteur (11), un générateur (12) qui est entraîné par le moteur (11) et délivre en sortie une tension qui est variable, et un moyen d'accumulation (17) connecté au générateur (12), l'appareil de commande de génération électrique comprenant :

un moyen de calcul de quantité d'accumulation (63) qui calcule une quantité d'accumulation du moyen d'accumulation (17) ;
un moyen de réglage de tension de sortie (70) qui règle une première valeur en tant que tension de sortie lorsque la quantité d'accumulation est sous une valeur seuil de quantité d'accumulation, et règle une seconde valeur, qui est inférieure à la première valeur, en tant que tension de sortie lorsque la quantité d'accumulation n'est pas inférieure à la valeur seuil de quantité d'accumulation ;
un moyen de détection d'état de démarrage (66) qui détecte un état de démarrage du moteur (11) ; et
un moyen de détection d'état de déplacement (67) qui détecte un état de déplacement du véhicule (10),
**caractérisé en ce que** :
le moyen de réglage de tension de sortie (70) règle la première valeur en tant que tension de sortie, indépendamment de la quantité d'accumulation calculée par le moyen de calcul de quantité d'accumulation (63), jusqu'à ce que le moyen de détection d'état de déplacement (67) détecte que le véhicule (10) se déplace après que le moyen de détection d'état de démarrage (66) détecte que le moteur (11) démarre par une opération d'un utilisateur dans un état de stationnement.

2. Appareil de commande de génération électrique selon la revendication 1, comprenant en outre un moyen de calcul de résistance interne (69) qui calcule une résistance interne du moyen d'accumulation (17),
dans lequel, lorsque la résistance interne du moyen d'accumulation (17) calculée par le moyen de calcul de résistance interne (69) n'est pas inférieure à une valeur seuil de résistance, le moyen de réglage de tension de sortie (70) règle la première valeur en tant que tension de sortie, même après que le moyen de détection d'état de déplacement (67) détecte que le véhicule (10) se déplace.

3. Appareil de commande de génération électrique selon la revendication 1 ou la revendication 2, comprenant en outre un moyen de détection d'état d'accumulation complète (64) qui détecte que le moyen d'accumulation (17) a atteint une limite d'accumulation,
dans lequel, lorsque la quantité d'accumulation du moyen d'accumulation (17) est incertaine, le moyen de réglage de tension de sortie (70) règle la première valeur en tant que tension de sortie, jusqu'à ce que le moyen de détection d'état d'accumulation complète (64) détecte que le moyen d'accumulation (17) a atteint une limite d'accumulation, même après que le moyen de détection d'état de déplacement (67) détecte que le véhicule (10) se déplace.

4. Appareil de commande de génération électrique selon la revendication 3, comprenant en outre un moyen de détection de courant (21) qui détecte un courant qui est entré dans le et délivré en sortie à partir du moyen d'accumulation (21),
dans lequel, lorsque le courant détecté par le moyen de détection de courant (21) est sous une valeur seuil de courant, le moyen de détection d'état d'accumulation complète (64) détermine que le moyen d'accumulation (17) a atteint une limite d'accumulation.

5. Appareil de commande de génération électrique selon la revendication 4,
dans lequel le moyen de calcul de quantité d'accumulation (63) calcule la quantité d'accumulation du moyen d'accumulation (17), sur la base du courant détecté par le moyen de détection de courant (21), et

l'appareil de commande de génération électrique comprend en outre un moyen d'initialisation de quantité d'accumulation calculée (65) qui exécute une commande d'initialisation de re-réglage de la quantité d'accumulation du moyen d'accumulation (17) calculée par le moyen de calcul de quantité d'accumulation (63) en une quantité d'accumulation complète, lorsque le moyen de détection d'état d'accumulation complète (64) détecte que le moyen d'accumulation (17) a atteint une limite d'accumulation.

FIG. 1

60: ECU

| | |
|---|---|
| 61 | ENGINE ROTATION SPEED CALCULATING UNIT |
| 62 | VEHICLE SPEED CALCULATING UNIT |
| 63 | ACCUMULATION AMOUNT CALCULATING UNIT |
| 64 | FULL ACCUMULATION STATE DETECTING UNIT |
| 65 | CALCULATED ACCUMULATION AMOUNT INITIALIZING UNIT |
| 66 | STARTUP STATE DETECTING UNIT |
| 67 | DRIVING STATE DETECTING UNIT |
| 68 | BATTERY REMOVAL DETECTING UNIT |
| 69 | INTERNAL RESISTANCE CALCULATING UNIT |
| 70 | INSTRUCTION VOLTAGE SETTING UNIT |

E/G

TO ELECTRIC PARTS

ECU

$\theta_{CL}$

$I_{BATT}$

$V_{BATT}$

$V_W$

$A_{CC}$

BATT

A

EP 2 363 937 B1

13

# FIG. 2 (A)   FIG. 2 (B)   FIG. 2 (C)

*FIG. 3*

```
                    ( START )
                        |
                        v               S11
                   /    IS     \   NO
               <  STARTUP DETERMINATION  >------------+
                   \   MADE?   /                      |
                        |                             v
                       YES                      ( RETURN )
                        |
                        v               S12
                   /    IS     \   NO
               <  DRIVING DETERMINATION  >----------+
                   \   MADE?   /                     |
                        |                            v
                       YES                          (IV)
                        |
                        v               S13
                  /  IS BATTERY  \  NO
              <  REMOVAL DETERMINATION  >-----------+
                  \    MADE?    /                    |
                        |                            v
                       YES                  /  BATTERY   \   S14   NO
                        |              <  INTERNAL RESISTANCE  >--------+
                        v                  \  RBATT > Rth?  /           |
                       (V)                        |                     v
                                                 YES                   (VI)
                                                  |
                                                  v
                                                 (V)
```

*FIG. 4*

(IV)

SET FIRST INSTRUCTION
VOLTAGE $V_{D1}$ (14.0[V]) AS
INSTRUCTION VOLTAGE $V_D$ —— S21
FOR POWER GENERATION

( RETURN )

*FIG. 5*

(V)

IS
DETERMINATION OF FULL        S31        NO
ACCUMULATION STATE
MADE?

(IV)

YES

(VI)

EP 2 363 937 B1

*FIG. 6*

VI

S41

BATTERY ACCUMULATION AMOUNT BT > 90%?

NO → S43

BATTERY ACCUMULATION AMOUNT BT ≥ 89%?

NO → IV

YES ↓

YES ↓

S42

SET SECOND INSTRUCTION VOLTAGE $V_{D2}$ (12.2$_{[V]}$) AS INSTRUCTION VOLTAGE $V_D$ FOR POWER GENERATION

S44

SET THIRD INSTRUCTION VOLTAGE $V_{D3}$ (12.8$_{[V]}$) AS INSTRUCTION VOLTAGE $V_D$ FOR POWER GENERATION

RETURN

RETURN

17

## FIG. 7

DETERMINATION OF FULL ACCUMULATION STATE
INITIALIZATION OF CALCULATED ACCUMULATION AMOUNT

READ OUT BATTERY
CURRENT I$_{BATT}$ — S51

READ OUT INSTRUCTION
VOLTAGE V$_D$ — S52

IS STATE
IN WHICH INSTRUCTION
VOLTAGE V$_D$ IS V$_{D1}$ AND
BATTERY CURRENT I$_{BATT}$ < CURRENT THRESHOLD
VALUE I$_{th}$ MAINTAINED FOR
PREDETERMINED TIME
PERIOD? — S53

NO → RETURN

YES

DETERMINE THAT BATTERY
IS FULLY ACCUMULATED — S54

SET BATTERY
ACCUMULATION AMOUNT BT IN
MEMORY TO BE 100% — S55

RETURN

## FIG. 8

```
        ┌─────────────────────────┐
        │  INTERNAL RESISTANCE    │
        │     CALCULATION         │
        └─────────────────────────┘
                    │
        ┌─────────────────────────┐
        │  READ DETECTION RESULT  │──── S61
        │    OF CURRENT SENSOR    │
        └─────────────────────────┘
                    │
        ┌─────────────────────────┐
        │  READ DETECTION RESULT  │──── S62
        │    OF VOLTAGE SENSOR    │
        └─────────────────────────┘
                    │
                   ╱ ╲
        NO        ╱   ╲  S63
     ┌──────────╱ IS CRANKING ╲
     │          ╲ OPERATION STARTED? ╱
     │          ╲(IS STARTUP DETERMINATION
     ▼           ╲  STARTED?)  ╱
 ┌────────┐       ╲   ╱
 │ RETURN │        │ YES
 └────────┘        │
        ┌──────────────────────────────┐
        │ RECORD BATTERY CURRENT IBATT AND │──── S64
        │ BATTERY VOLTAGE VBATT IN MEMORY  │
        └──────────────────────────────┘
                    │
                   ╱ ╲  S65
                  ╱   ╲
         ╱ IS CRANKING ╲        NO
        ╱ OPERATION COMPLETED? ╲──────┐
        ╲(IS STARTUP DETERMINATION    ▼
         ╲  COMPLETED?) ╱         ┌────────┐
          ╲   ╱                   │ RETURN │
           │ YES                  └────────┘
        ┌─────────────────────────┐
        │   CALCULATE BATTERY     │──── S66
        │ INTERNAL RESISTANCE RBATT │
        └─────────────────────────┘
                    │
        ┌─────────────────────────┐
        │   ERASE IBATT AND VBATT  │──── S67
        │   RECORDED IN MEMORY    │
        └─────────────────────────┘
                    │
              ┌────────┐
              │ RETURN │
              └────────┘
```

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006230102 A
- JP 2005080396 A
- JP 2009232648 A